# EUROPÄISCHE PATENTANMELDUNG

(11) **EP 4 837 694 A1**
(43) Veröffentlichungstag der Anmeldung: **11.11.2026**
(21) Anmeldenummer: 26175580.5
(22) Anmeldetag: 29.04.2026
(51) Int. Cl.: B23P 19/02, B21D 39/03, B21J 15/02, G01L 1/22, G01L 1/26

(54) **FÜGESYSTEM**

(30) Priorität: 07.05.2025 EP 25174884
(71) Anmelder: Kistler Holding AG, 8408 Winterthur (CH)
(72) Erfinder: Balzer, Peter, 75527 Schwäbisch Gmünd (DE); Jensen, Peter Rene, 4300 Holbaek (DK); Koch, Stefan, 8442 Hettlingen (CH)

(57) **Zusammenfassung**

Die Erfindung betrifft ein Fügesystem mit einem Kraftaufnehmer und einem Beschleunigungsaufnehmer zur Erfassung der Beschleunigung eines Fügewerkzeugs.

## Beschreibung

### Technisches Gebiet

Die vorliegende Erfindung betrifft ein elektromechanisches Fügesystem mit Beschleunigungsaufnehmer.

### Stand der Technik

Fügesysteme finden in der industriellen Fertigung Verwendung und werden für das Verbinden von Werkstücken, auch Bauteile, Fügekörper oder Bauelemente genannt, durch verschiedene Verfahren wie Einpressen, Clinchen, Nieten und/oder Verstemmen eingesetzt. Diese Verfahren werden unter dem Oberbegriff Fügeverfahren zusammengefasst, wobei durch den Fügevorgang Werkstücke miteinander verbunden werden. Manchmal werden Fügeverfahren in Verbindung mit weiteren Verbindungstechniken wie Schweißen und/oder Kleben eingesetzt. Fügesysteme, auch als Einpresssysteme bekannt, nutzen mechanische Kraft, um Werkstücke zu verbinden, und sind unter anderem in der Automobilindustrie verbreitet.

Fügesysteme sind besonders geeignet für Anwendungen, bei denen mittlere bis hohe Kräfte aufgebracht werden müssen, um Werkstücke dauerhaft zu verbinden. Diese Systeme bieten eine hohe Wiederholgenauigkeit und Prozesssicherheit, was sie ideal für die Serienproduktion macht. Fügesysteme sind durch die Vielzahl von Anwendung sehr flexibel einsetzbar. Die Anwendungen umfassen beispielsweise Einpressen, also ein mechanisches Verbinden von Bauteilen durch das Einpressen eines Teils in ein anderes. Einpressen wird beispielsweise in der Automobilindustrie verwendet, um Lager, Buchsen und andere Komponenten zu montieren. Verstemmen ist ein Fügeverfahren zum mechanischen Verbinden von Bauteilen durch plastische Verformung. Diese Technik wird beispielswiese in der Herstellung von Gehäusen und Behältern eingesetzt. Ein weiteres Fügeverfahren ist das Nieten, also das Verbinden von Bauteilen durch Nieten, bei denen ein Niet durch die zu verbindenden Teile gesteckt und dann verformt wird, um eine feste Verbindung zu schaffen. Fügesysteme werden ebenfalls für das Clinchen verwendet, welches Blechen ohne zusätzliche Verbindungselemente durch plastische Verformung verbindet, oder für das Einrasten bzw. Verclipsen eines Teils in ein anderes, beispielsweise durch eine Schnappverbindung. Diese Technik wird häufig in der Elektronik und Kunststoffverarbeitung verwendet. Ebenfalls werden Fügesysteme zum Verschliessen von Öffnungen verwendet, aber auch zum Einpressen, insbesondere zum Kugeleinpressen von Kugeln in Bauteile, um eine feste Verbindung zu schaffen, beispielsweise in der Lagertechnik. Weitere Anwendungen von Fügesystemen umfassen das Crimpen oder die Setzkraft, letztere zur Positionierung eines Bauteils in eine bestimmte Position.

Anwendungen von Fügesystemen umfassen zudem auch Prüfvorgänge, bei denen eine Kraft ermittelt wird, beispielsweise der Prüfung einer Federkraft in der Federprüfung oder einer Elastizitätsprüfung der elastischen Eigenschaften von Materialien, um ihre Fähigkeit zur Rückkehr in die ursprüngliche Form nach Verformung zu überprüfen, sowie Steckkraft- und Ausziehkraftprüfung von Steckkontakten oder Steckverbindungen.

In den verschiedenen Anwendungen sind die Bauteile, auf die durch ein Fügewerkzeug eine Kraft ausgeübt wird sehr verschieden. In dieser Schrift wird daher allgemein der Begriff Werkstück verwendet. Das Werkstück kann dabei beispielsweise ein Prüfling oder ein zu verbindendes Element oder ein Verbindungselement oder ähnliches sein, abhängig von der angestrebten Anwendungen des Fügesystems.

Bekannte Fügesysteme sind oft mit einem Steuerungselement ausgestattet, die eine Integration in automatisierte Produktionslinien ermöglichen. Ein Fügesystem weist dabei einen Antrieb auf, der einen Aktor relativ zu einem Stator bewegt. Der Aktor weist ein Fügewerkzeug auf, mit welchem eine Kraft für einen Fügevorgang auf zu verbindende Werkstücke aufgebracht wird. Bekannt sind pneumatische, hydraulische und elektromechanische Antriebe, wobei elektromechanische Antriebe generell energieeffizienter als hydraulische und pneumatische Antriebe sind.

Ein effizienter Fügevorgang zeichnet sich dadurch aus, dass die aufgebrachte Kraft präzise der Sollkraft für die jeweilige Anwendung entspricht. Die Sollkraft ist die Kraft, mit dem der Fügevorgang ausgeführt werden soll, um optimale Ergebnisse zu erzielen. Ein Aufbringen einer höheren Kraft ist nicht energieeffizient, da mehr Energie benötigt wird als für den Fügevorgang notwendig ist. Zudem können Werkstücke beschädigt oder sogar zerstört werden und so unbrauchbar sein, was zu einem erhöhten Ausschuss führt. Eine niedrigere Kraft als die Sollkraft kann ebenso zu einem hohen Ausschuss und unbrauchbaren Werkstücken führen, beispielsweise wenn die Kraft nicht ausreicht einen Fügevorgang abzuschliessen und Werkstücke nicht oder nicht ausreichend miteinander verbunden sind.

Bekannt sind Fügesysteme beispielsweise aus EP2456594A1, welche einen Kraftaufnehmer im Bereich des Fügewerkzeugs aufweist. Im Fügevorgang wird das Fügewerkzeug zum Werkstück hin bewegt, um eine Fügekraft, auf das Werkstück aufzubringen. Der Kraftaufnehmer ist im Krafthauptschluss oder zumindest im Kraftnebenschluss zwischen Antrieb und Fügewerkzeug angeordnet, um direkt die auf das Fügewerkzeug wirkende Kraft zu ermitteln. Die Kraft, welche auf das Fügewerkzeug wirkt, ist nach dem 3. Newtonschen Gesetz gleich der Kraft, welche auf den Fügekörper wirkt. Über eine Rückmeldung der Kraft an den Antrieb kann die Sollkraft aufgebracht werden. Störend ist hierbei jedoch zumindest die Masse des Fügewerkzeugs bzw. aller zwischen Kraftaufnehmer und Werkstück angeordneter Massen, welche durch Massenträgheit bei der im Fügevorgang auftretenden Beschleunigung ebenfalls eine Kraft auf den Kraftaufnehmer ausüben. Dies ist bei bekannten Fügesystemen mit Geschwindigkeiten kleiner 400 mm/s oftmals vernachlässigbar, verfälscht aber die Ermittlung der Kraft, sodass die ermittelte Kraft nicht genau mit der tatsächlich auf das Werkstück wirkenden Fügekraft übereinstimmt.

Die Geschwindigkeit eines Fügesystems, bzw. des Aktors, bestimmt jedoch die Anzahl der Fügevorgänge pro Zeiteinheit. Eine Effizienzsteigerung durch ein Anheben der Geschwindigkeit des Aktors ist jedoch nicht möglich ohne die Ermittlung der Kraft durch den Kraftaufnehmer durch die, mit der Erhöhung der Geschwindigkeit auftretende, höhere Beschleunigung negativ zu beeinflussen.

Aufgabe der Erfindung ist es die erwähnten Nachteile zu verringern.

### Darstellung der Erfindung

Die Aufgabe wird durch die Merkmale der unabhängigen Ansprüche gelöst.

Die Erfindung betrifft ein Fügesystem zum Aufbringen einer Fügekraft auf ein Werkstück. Das Fügesystem weist einen Stator auf. Das Fügesystem weist zudem einen Antrieb auf. Das Fügesystem weist auch einen Aktor auf. Der Aktor weist eine starre Verbindung mit einem Kraftaufnehmer auf. Der Kraftaufnehmer weist eine starre Verbindung mit einem Fügewerkzeug auf. Der Aktor ist kontrolliert bewegbar zum Stator angeordnet. Das Fügewerkzeug ist in Wirkverbindung mit dem Aktor derart angeordnet, dass das Fügewerkzeug eingerichtet ist die Fügekraft auf das Werkstück aufzubringen. Der Kraftaufnehmer ist zwischen Aktor und Fügewerkzeug angeordnet, wobei der Kraftaufnehmer eingerichtet ist, eine auf das Fügewerkzeug wirkende Kraft zu erfassen. Der Begriff Wirkverbindung bezeichnet eine starre Verbindung die geeignet ist eine Wirkung, beispielsweise eine Kraftwirkung, zu übertragen.

Erfindungsgemäss ist ein Beschleunigungsaufnehmer in Wirkverbindung mit dem Fügewerkzeug angeordnet. Der Beschleunigungsaufnehmer ist eingerichtet, eine Beschleunigung des Fügewerkzeugs zu erfassen.

Dies ist vorteilhaft, da durch Kenntnis der Beschleunigung des Fügewerkzeugs Rückschlüsse auf eine daraus resultierende Abweichung der erfassten Kraft von der angestrebten Fügekraft geschlossen werden kann.

Bevorzugt weist das Fügesystem eine Signalverarbeitungseinrichtung auf. Die Signalverarbeitungseinrichtung ist eingerichtet einen Beschleunigungswert des Beschleunigungsaufnehmers zu erfassen. Zudem ist die Signalverarbeitungseinrichtung eingerichtet einen Kraftwert des Kraftaufnehmers zu erfassen. Die Signalverarbeitungseinrichtung ist eingerichtet den Kraftwert und den Beschleunigungswert zusammenzuführen und einen beschleunigungskompensierten Kraftwert, kurz Fügekraftwert, zu ermitteln. Durch die Beschleunigung des Fügewerkzeugs wirkt aufgrund der Masse des Fügewerkzeugs eine Kraft auf den Kraftaufnehmer, die proportional zur Beschleunigung ist. Der Kraftaufnehmer erfasst daher sowohl die Kraft, die durch diese Beschleunigung verursacht ist, als auch die Fügekraft, die auf das Werkstück wirkt, sobald das Fügewerkzeug mit dem Werkstück in Kontakt ist. Da nur der Fügekraftwert ermittelt werden soll, muss vorteilhafterweise die Beschleunigung ermittelt werden und mit einer vorab ermittelten Masse des Fügewerkzeugs eine Beschleunigungskraft ermittelt werden. Die Beschleunigungskraft entspricht dabei dem Produkt aus Beschleunigungswert und der Masse des Fügewerkzeugs. Die Masse des Fügewerkzeugs entspricht dabei allen Massen, die zwischen Werkstück und Kraftaufnehmer angeordnet sind.

Bevorzugt ist die Signalverarbeitungseinrichtung eingerichtet den Beschleunigungswert zeitgleich zum Kraftwert zu erfassen. Die Signalverarbeitungseinrichtung ist eingerichtet den zeitgleich erfassten Kraftwert und Beschleunigungswert zusammenzuführen und einen Fügekraftwert zu ermitteln. Die zeitgleiche Erfassung und Zusammenführung von Kraftwert und Beschleunigungswert hat den Vorteil, dass der Fügekraftwert direkt ermittelt und zur weiteren Verwendung zur Verfügung gestellt wird. Eine nachträgliche zeitliche Synchronisation einer zeitlichen Abfolge ermittelter Kraftwerte mit einer zeitlichen Abfolge ermittelter Beschleunigungswerte ist alternativ möglich, entfällt aber bei zeitgleicher Ermittlung. Der Fügekraftwert kann so nahezu ohne zeitliche Verzögerung ermittelt werden.

Unter zeitgleichem Erfassen, auch Gleichzeitigkeit des Erfassens oder gleichzeitiges Erfassen genannt, wird eine Verzögerung zwischen der Erfassung des Kraftwerts und der Erfassung des Beschleunigungswerts von weniger als 100 Mikrosekunden, bevorzugt weniger als 50 Mikrosekunden verstanden.

Die Signalverarbeitungseinrichtung weist bevorzugt einen Algorithmus auf, der eingerichtet ist aus dem Kraftwert und dem Beschleunigungswert den Fügekraftwert zu ermitteln. Der Algorithmus ermittelt den Fügekraftwert als Funktion des Produkts aus Beschleunigungswert und einem optionalen Beschleunigungskorrekturfaktors summiert mit dem Produkt aus dem Kraftwert und einem optionalen Kraftkorrekturfaktor summiert mit der Summe aus einem optionalen Kraftversatz und einem optionalen Beschleunigungsversatz. Der Algorithmus stellt den Fügekraftwert zur weiteren Verwendung bereit.

Bevorzugt weist das Fügesystem eine Steuerungseinrichtung auf. Die Steuerungseinrichtung steuert den Antrieb. Die Steuerungseinrichtung steuert dadurch die Bewegung des Aktors bezüglich des Stators. Die Steuerungseinrichtung kann einen Algorithmus aufweisen. Die Steuerungseinrichtung ist bevorzugt eingerichtet den Fügekraftwert zu erfassen. Der Fügekraftwert wird von der Signalverarbeitungseinrichtung bereitgestellt. Die Steuerungseinrichtung ist eingerichtet den Fügekraftwert mit einer Sollkraft zu vergleichen. Die Sollkraft ist dabei diejenige Kraft, die auf das Werkstück aufgebracht werden soll. Die Steuerungseinrichtung ist eingerichtet den Aktor derart zu bewegen, dass der Fügekraftwert sich der Sollkraft angleicht. Dies ist vorteilhaft, da das Fügewerkzeug die Kraft auf das Werkstück aufbringt, die für den Fügevorgang optimal ist. Auch ist es so möglich, Signaturen für das Einrasten oder Verclipsen im zeitlichen Verlauf der Fügekraft zu erkennen. Diese Signatur kann als Signal für eine Änderung des Sollwerts dienen. So kann beispielsweise nach der erkannten Signatur eines Einrastens die Sollkraft für den weiteren Fügevorgang erhöht oder verringert werden, der Fügevorgang sofort oder nach einer bestimmten Zeit beendet werden idem der Aktor in eine Ausgangsposition zurückbewegt wird, oder die Geschwindigkeit der Bewegung des Fügevorgangs angepasst werden.

Besonders bevorzugt weist das Fügesystem einen Wegaufnehmer auf. Der Wegaufnehmer ermittelt einen Wegwert und stellt diesen zur weiteren Verwendung bereit. Der Wegwert ist einer räumlichen Position des Fügewerkzeugs eindeutig zuordenbar. Da der Aktor fest mit dem Fügewerkzeug verbunden ist, kann der Wegwert auch einer entsprechenden relativen Stellung von Aktor und Stator zuordenbar sein. Dies hat den Vorteil, dass auch komplexe Fügevorgänge möglich sind, bei denen die Fügekraft abhängig von der Position des Fügewerkzeugs unterschiedliche Kräfte auf das Werkstück aufbringen soll. Auch ist es so möglich Signaturen für das Einrasten oder Verclipsen sowohl im zeitlichen Verlauf der Fügekraft als auch im örtlichen Verlauf der Fügekraft zu erfassen. So kann zusätzlich zu den Vorteilen bei einer erkannten Signatur eines Einrastens auch eine bestimmte Strecke für den weiteren Fügevorgang vorgesehen werden. Es kann beispielsweise nach erkannter Signatur eines Einrastens eine Strecke festgelegt werden, für die der Fügevorgang weitergeführt werden soll, optional unter Anpassung der Fügegeschwindigkeit und/oder der Sollkraft.

Besonders vorteilhaft kann auch eine Sollkraft festgelegt werden, die abhängig vom Wegwert ist. Der Fügeprozess kann derart erfolgen, dass eine bestimmte Sollkraft in Abhängigkeit der Position und/oder der Zeit vorgegeben ist und durch den Steuerungseinrichtung unter Berücksichtigung des Fügekraftwerts und des Wegwerts präzise auf das Werkstück aufgebracht wird.

Besonders kommen die Vorteile der Erfindung und der bevorzugten Merkmale zum Tragen, wenn der Aktor gegen den Stator mit einer Geschwindigkeit von mehr als 400 mm·s⁻¹ (Millimeter pro Sekunde) bewegt wird. Die Anzahl der Fügeprozesse pro Zeiteinheit soll üblicherweise hoch sein, um möglichst viele Werkstücke in möglichst kurzer Zeit bearbeiten zu können und so Produktionskosten des Werkstücks gering zu halten. Aufgrund der oben genannten Probleme werden jedoch üblicherweise Fügemodule mit Geschwindigkeiten unterhalb 400 mm·s⁻¹ verwendet. Bei einem Fügevorgang wird der Aktor zu Beginn eines Fügevorgangs gegenüber dem Stator aus einer Ausgangsposition, oft auch als Null-Position, Anfangsposition oder Initialposition bezeichnet, zum Werkstück bewegt. Dabei legt das Fügewerkzeug eine freie Strecke zurück, bevor es mit dem Werkstück in Kontakt kommt. Die freie Strecke ist notwendig, um nach einem erfolgtem Fügevorgang ein bearbeitetes Werkstück zu entfernen und ein neues Werkstück zur Bearbeitung für das Fügewerkzeug bereitzustellen. Diese freie Strecke soll möglichst schnell überwunden werden. Dafür ist eine hohe Geschwindigkeit nötig, wobei eine hohe Beschleunigung auftritt. Vor der vorbekannten Position des Werkstückes kann die Bewegung zudem gebremst werden, um einen Schlag auf das Werkstück zu vermeiden, wobei ebenfalls hohe Beschleunigungen auftreten. Und auch nach erstmaligem Kontakt mit dem Werkstück kann die Geschwindigkeit des Fügevorgangs verändert werden, um den Fügevorgang in einer möglichst kurzen Zeit zu beenden. Daher wird besonders vorteilhafterweise der Aktor gegen den Stator mit einer Geschwindigkeit von mehr als 1500 mm·s⁻¹ bewegt.

Bevorzugt ist die Signalverarbeitungseinrichtung eingerichtet den Kraftwert und den Beschleunigungswert mit einer Abtastrate von mindestens 1 kHz, bevorzugt 10 kHz, zu erfassen. Alternativ ist die Signalverarbeitungseinrichtung eingerichtet den Kraftwert und den Beschleunigungswert mindestens jede Millisekunde, besonders bevorzugt mindestens jede 100 Mikrosekunden, zu erfassen. Dies ist vorteilhaft, da Signaturen im Fügekraftwert, wie beispielsweise ein Anstieg der Fügekraft bei erstmaligem Kontakt mit dem Werkstück, oder die Signatur eines Einclipsens oder Einrastens schnell erfasst werden und eine Anpassung der Sollkraft und/oder der Geschwindigkeit, etc. vorgenommen werden kann. So wird sichergestellt, dass die optimale Sollkraft als Fügekraft auf das Werkstück zu jedem Zeitpunkt des Fügeprozesses auf das Werkstück aufgebracht wird.

Bevorzugt weist das Fügesystem mindestens eine Bremse auf. Die Bremse eingerichtet ist eingerichtet die Bewegung des Aktors relativ zum Stator zu bremsen. Hierbei treten höhere Beschleunigungskräfte auf als bei einer Steuerung der Geschwindigkeit über den Antrieb. Die Bremse kann analog zum Antrieb durch die Steuerungseinrichtung gesteuert sein. Die Bremse ist eingerichtet die Geschwindigkeit des Aktors relativ zum Stator zu verringern und/oder den Aktor relativ zum Stator festzustellen. Durch die schnellere Abbremsung verringert sich die Bearbeitungszeit eines Werkstückes.

Bevorzugt ist der Antrieb als elektromechanischer Antrieb ausgeführt. Elektromechanische Antriebe sind präziser bewegbar als pneumatische oder hydraulische Antriebe. Zudem weisen elektromechanische Antriebe eine höhere Energieeffizienz auf. Der Aktor ist zum Stator durch den Antrieb linear verstellbar. Der Stator stellt einen feststehenden Teil des Fügesystems dar. Üblicherweise ist der Stator ortsfest in einem Raum, beispielsweise einer Fertigungshalle, angeordnet. Der Aktor kann beispielsweise eine Gewindeachse ein, die von einer Hohlwelle des Antriebs bewegt wird.

Um eine Verdrehung des Aktors und damit des Fügewerkzeugs zu vermeiden, ist der Aktor mit mindestens einer Linearführung, bevorzugt zwei Linearführungen, beweglich mit dem Stator verbunden. Die Linearführung beschränkt die lineare Bewegung des Aktors auf eine Raumachse.

Der Kraftaufnehmer ist beispielsweise als piezoelektrischer Kraftaufnehmer oder als piezoresistiver Kraftaufnehmer oder als ein Kraftaufnehmer aufweisend Dehnungsmessstreifen ausgeführt. Der Beschleunigungsaufnehmer ist vorteilhafterweise ein piezoelektrischer Beschleunigungsaufnehmer. Es sind aber auch andere Ausführungsformen eines Beschleunigungsaufnehmers denkbar. Der Kraftaufnehmer ist zwischen Fügewerkzeug und Aktor angeordnet. Dies hat den Vorteil, dass die Ermittlung der Kraft nah am Fügewerkzeug erfolgt, welches Fügewerkzeug die Fügekraft auf das Werkstück aufbringt. Störende Einflüsse, beispielsweise durch viele zwischenliegende Elemente bzw. Nebenkraftschlüsse sind verringert. Der Kraftaufnehmer ist vorteilhafterweise im Krafthauptschluss, auch Hauptkraftschluss genannt, zwischen Fügewerkzeug und Aktor angeordnet. Als Hauptkraftschluss wird der Kraftschluss bezeichnet, an welchem der höchste Anteil der Kraft anliegt. Der Begriff Kraftschluss, Hauptkraftschluss sowie Kraftnebenschluss werden nach Kapitel 9.2 der Publikation «Piezoelektrische Meßtechnik» von G. Gautschi, Springer Verlag aus dem Jahr 1980 verstanden. Die Anordnung des Kraftaufnehmers im Krafthauptschluss ist vorteilhaft, da dadurch der Grossteil der Kraft, die auf das Werkstück wirkt, auch auf den Kraftaufnehmer wirkt. Dies verbessert die Messgenauigkeit der Fügekraft gegenüber Fügesystemen, bei denen der Kraftaufnehmer in einem Nebenkraftschluss angeordnet ist und einem geringeren Anteil der Fügekraft ausgesetzt ist.

Es kann zudem vorgesehen sein, dass das Fügesystem mehrere Fügewerkzeuge aufweist. Die mehreren Fügewerkzeuge sind in Wirkverbindung mit dem einen Aktor derart angeordnet dass die Fügewerkzeuge jeweils eingerichtet sind eine Fügekraft aufzubringen. Dazu ist entweder das Werkstück beweglich angeordnet, sodass es jeweils unter das Fügewerkzeug bewegbar ist, das den nächsten Fügevorgang ausführen soll. Alternativ können auch die Fügewerkzeuge am Aktor beweglich angeordnet sein, beispielsweise in einem Fügewerkzeugrevolver, auch Werkzeugrevolver oder Revolverhalterung genannt. Zwischen jedem Fügewerkzeug und dem Aktor ist jeweils ein Kraftaufnehmer angeordnet. Die Signalverarbeitungseinrichtung schaltet jeweils entsprechend dem jeweilig verwendeten Fügewerkzeug zwischen den Kraftaufnehmern und ermittelt den Fügekraftwert auf Grund des jeweiligen Kraftwerts und der vorgängig bestimmten träge Masse des Fügewerkzeugs. Es ist weiterhin nur ein Beschleunigungsaufnehmer vorgesehen, da die mehreren Fügewerkzeuge gesamtheitlich durch den Aktor bewegt werden. Dies ist vorteilhaft, da so komplexe Fügevorgänge, die verschiedene Fügewerkzeuge benötigen, mit einem Fügesystem ausgeführt werden können.

Ein Fügewerkzeug kann beispielsweis eine Halterung sein, welche ein Teilwerkstück haltert. Die Halterung kann beispielsweise zum Werkstück bewegt werden und das Teilwerkstück an das Werkstück anfügen. Nach einem Wechsel des Fügewerkzeugs zu einem Stössel kann das Teilwerkstück mittels des Stössel gegen das Werkstück gepresst werden, beispielsweise um es in das Werkstück einzurasten.

Ein erfindungsgemässes Verfahren zum Aufbringen einer Fügekraft auf ein Werkstück durch ein Fügesystem, beinhaltet, dass der Antrieb den Aktor gegen den Stator kontrolliert bewegt. Der Aktor startet dabei die Bewegung aus der Ausgangsposition und wird von dort in Richtung des Werkstücks beschleunigt. Der Aktor ist mit mindestens dem Kraftaufnehmer und mindestens einem Fügewerkzeug starr verbunden, wodurch der Kraftaufnehmer die auf das Fügewerkzeug wirkende Kraft als Kraftwert ermittelt. Das Fügewerkzeug ist in Wirkverbindung mit dem Aktor derart angeordnet, dass das Fügewerkzeug in Richtung eines Werkstückes bewegt wird, um eine Fügekraft auf das Werkstück aufzubringen. Die Bewegung bedingte eine Beschleunigung des Fügewerkzeugs, welche eine Kraft auf den Kraftaufnehmer ausübt, welcher Kraftaufnehmer zwischen Aktor und Fügewerkzeug angeordnet ist um die auf das Fügewerkzeug wirkende Kraft zu ermitteln. Der Beschleunigungsaufnehmer ist in Wirkverbindung mit dem Fügewerkzeug angeordnet ist ermittelt die Beschleunigung des Fügewerkzeugs als Beschleunigungswert. Der Antrieb bewegt den Aktor in Abhängigkeit einer Funktion aus Kraftwert und Beschleunigungswert, um den Fügekraftwert einem vordefinierten Sollkraftwert anzugleichen.

In dem Verfahren ist vorteilhafterweise vorgesehen, dass die Signalverarbeitungseinrichtung den Beschleunigungswert des Beschleunigungsaufnehmers erfasst und den Kraftwert des Kraftaufnehmers erfasst. Die Signalverarbeitungseinrichtung weist einen Algorithmus auf, welcher aus dem Kraftwert und dem Beschleunigungswert einen beschleunigungskompensierten Kraftwert, kurz Fügekraftwert, ermittelt. Die Signalverarbeitungseinrichtung stellt den Fügekraftwert bereit. Dies kann als analoges Signal oder digitales Signal elektrisch, elektronisch oder optoelektronisch ausgeführt sein. Vorteilhafterweise erfasst die Steuerungseinrichtung den bereitgestellten Fügekraftwert und vergleicht den Fügekraftwert mit der Sollkraft. Die Sollkraft kann, wie bereits beschrieben, zeitabhängig und/oder Positionsabhängig und/oder Ereignisabhängig sein. Ein Ereignis ist beispielsweise das Auftreten einer Signatur eines Einclipsens oder Einrastens oder das Über-/ oder Unterschreiten eines vordefinierten Fügekraftwerts. Die Steuerungseinrichtung bewegt den Aktor in Abhängigkeit von der Differenz zwischen Sollkraft und Fügekraftwert.

Die Signalverarbeitungseinrichtung erfasst den Beschleunigungswert vorteilhafterweise zeitgleich zum Kraftwert, wobei die Verzögerung zwischen der Erfassung des Kraftwerts und der Erfassung des Beschleunigungswerts kleiner oder gleich 100 Mikrosekunden, bevorzugt kleiner 50 Mikrosekunden ist. Vorteilhafterweise erfasst der Wegaufnehmer die räumlichen Position des Fügewerkzeugs eineindeutig als Wegwert. Die Sollkraft kann abhängig vom Wegwert sein.

Bevorzugt findet das Verfahren Anwendung bei einem Fügesystem, in dem sich der Aktor mit einer Geschwindigkeit von mehr als 400 mm·s⁻¹ relativ zum Stator bewegt. Bevorzugt bewegt sich der Aktor mit einer Geschwindigkeit von mehr als 1500 mm·s⁻¹ relativ zum Stator. Die Signalverarbeitungseinrichtung erfasst den Kraftwert und den Beschleunigungswert mit einer Abtastrate von mindestens 1 kHz, bevorzugt 10 kHz. Alternativ erfasst die Signalverarbeitungseinrichtung den Kraftwert und den Beschleunigungswert mindestens jede Millisekunde, bevorzugt mindestens jede 100 Mikrosekunden.

Bevorzugt wird in dem Verfahren die Fügekraft mittels Algorithmus der Signalverarbeitungseinrichtung als die Summe aus dem Produkt aus Beschleunigungswert und Beschleunigungskorrekturfaktor und dem Produkt aus Kraftwert und Kraftkorrekturfaktor und einem Kraftversatz und einem Beschleunigungsversatz gebildet und bereitstellt.

Selbstverständlich kann die Ermittlung der Fügekraft auch alternativ erfolgen. Beispielsweise können der Kraftkorrekturfaktor und/oder der Beschleunigungskorrekturfaktor und/oder der Kraftversatz und/oder der Beschleunigungsversatz abhängig von der Höhe der aktuellen Geschwindigkeit des Fügewerkzeugs und/oder dem aktuellen Beschleunigungswert des Fügewerkzeugs und/oder dem aktuellen ermittelten Kraftwert sein.

### Kurze Beschreibung der Zeichnungen

Im Folgenden wird die Erfindung beispielhaft unter Beizug der Figuren näher erklärt. Es zeigen
- Fig. 1: eine schematische Darstellung eines Fügesystems nach dem Stand der Technik,
- Fig. 2: eine schematische Darstellung einer Ausführungsform eines Fügesystems,
- Fig. 3: eine schematische Darstellung einer weiteren Ausführungsform eines Fügesystems,
- Fig. 4: eine schematische Darstellung einer weiteren Ausführungsform eines Fügesystems,
- Fig. 5: eine schematische Darstellung des beschleunigungskompensierten Kraftwerts,
- Fig. 6: eine schematische Darstellung einer weiteren Ausführungsform eines Fügesystems.

### Wege zur Ausführung der Erfindung

Gleiche Elemente bzw. Elemente mit gleicher Funktion sind in den Figuren mit den gleichen Bezugsziffern versehen.

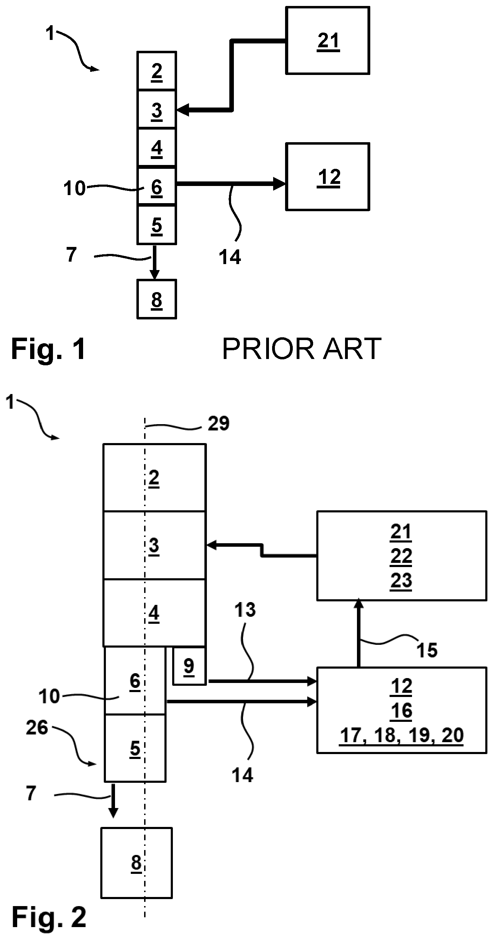

Fig. 1 zeigt ein Fügesystem 1 zum Aufbringen einer Fügekraft 7 auf ein Werkstück 8 nach dem Stand der Technik. Das Fügesystem 1 weist einen Stator 2, einen Antrieb 3 und einen Aktor 4 auf. Der Antrieb 3 ist mit einer Steuerungseinrichtung 21 verbunden. Der Aktor 4 weist eine starre Verbindung mit einem Kraftaufnehmer 6 auf, welcher Kraftaufnehmer 6 eine starre Verbindung mit einem Fügewerkzeug 5 aufweist. Der Aktor 4 ist kontrolliert bewegbar zum Stator 2 angeordnet und das Fügewerkzeug 5 ist in Wirkverbindung mit dem Aktor 4 derart angeordnet, dass das Fügewerkzeug 5 eingerichtet ist, die Fügekraft 7 auf das Werkstück 8 aufzubringen. Der Kraftaufnehmer 6 ist zwischen Aktor 4 und Fügewerkzeug 5 angeordnet und ist eingerichtet eine auf das Fügewerkzeug 5 wirkende Kraft 10 zu erfassen. Die Kraft 10 wird als Kraftwert 14 an eine Signalverarbeitungseinrichtung 12 bereitgestellt.

Fig. 2 zeigt eine schematische Darstellung einer Ausführungsform eines Fügesystems 1 zum Aufbringen einer Fügekraft 7 auf ein Werkstück 8. Auch dieses Fügesystem 1 weist die aus dem Stand der Technik bekannten Elemente, nämlich einen Stator 2, einen Antrieb 3 und einen Aktor 4 auf. Der Antrieb 3 ist mit einer Steuerungseinrichtung 21 verbunden. Der Aktor 4 weist eine starre Verbindung mit einem Kraftaufnehmer 6 auf, welcher Kraftaufnehmer 6 eine starre Verbindung mit einem Fügewerkzeug 5 aufweist. Der Aktor 4 ist kontrolliert bewegbar zum Stator 2 angeordnet und das Fügewerkzeug 5 ist in Wirkverbindung mit dem Aktor 4 derart angeordnet, dass das Fügewerkzeug 5 eingerichtet ist, die Fügekraft 7 auf das Werkstück 8 aufzubringen. Der Kraftaufnehmer 6 ist zwischen Aktor 4 und Fügewerkzeug 5 angeordnet und ist eingerichtet eine auf das Fügewerkzeug 5 wirkende Kraft 10 zu erfassen. Die Kraft 10 wird als Kraftwert 14 an eine Signalverarbeitungseinrichtung 12 bereitgestellt. Zusätzlich zu den Elementen gleicher Funktion aus dem Stand der Technik weist die Ausführungsform der Fig. 2 erfindungsgemäss einen Beschleunigungsaufnehmer 9 auf. Der Beschleunigungsaufnehmer 9 ist eingerichtet eine Beschleunigung des Fügewerkzeugs 5 zu erfassen und als Beschleunigungswert 13 bereitzustellen.

Die Signalverarbeitungseinrichtung 12 der in Fig. 2 dargestellten Ausführungsform ist eingerichtet den Beschleunigungswert 13 und den Kraftwert 14 zu erfassen. Die Signalverarbeitungseinrichtung 12 ist eingerichtet den Kraftwert 14 und den Beschleunigungswert 13 zusammenzuführen und einen beschleunigungskompensierten Kraftwert 15, kurz Fügekraftwert 15, zu ermitteln und bereitzustellen.

Die Steuerungseinrichtung 21 ist eingerichtet den Antrieb 3 derart zu steuern, dass der Fügekraftwert 15 sich dem Sollkraftwert 23 annähert. Die Steuerungseinrichtung vergleicht dafür den Fügekraftwert 15 innerhalb eines Algorithmus 22 mit dem Sollkraftwert 23.

Die Signalverarbeitungseinrichtung 12 zeigt exemplarisch den Algorithmus 16, welcher den Fügekraftwert 15 ermittelt als Produkt aus Beschleunigungswert 13 und Beschleunigungskorrekturfaktor 17 summiert mit dem Produkt aus Kraftwert 14 und Kraftkorrekturfaktor 18 summiert mit der Summe aus Kraftversatz 19 und Beschleunigungsversatz 20.

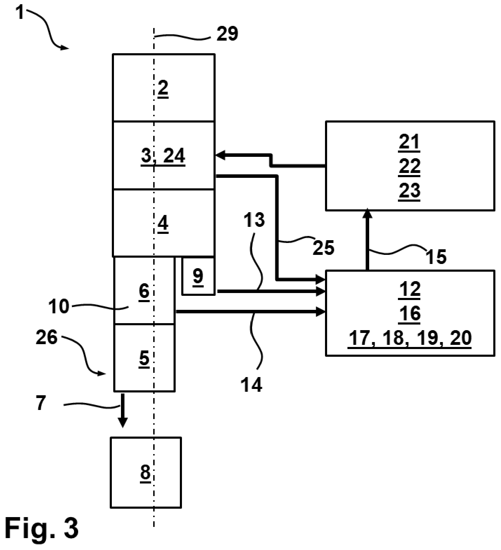

Fig. 3 zeigt eine weitere Ausführungsform eines Fügesystems. Zusätzlich zu den Merkmalen der Ausführungsform der Fig. 2 weist diese Ausführungsform einen Wegaufnehmer 24 auf, welcher eingerichtet ist einen Wegwert 25 bereitzustellen. Die Steuerungseinrichtung 21 ist eingerichtet den Wegwert 25 zur Steuerung des Antriebs 3 zu berücksichtigen. Beispielsweise kann der Sollkraftwert unter anderem, wie oben beschreiben, vom Wegwert abhängig sein.

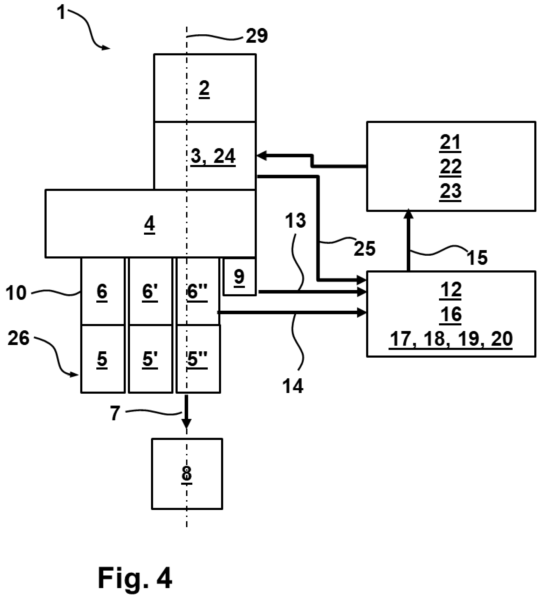

In Fig. 4 ist eine schematische Darstellung einer weiteren Ausführungsform eines Fügesystems dargestellt. Im Unterschied zu den bereits beschriebenen Ausführungsformen der Fig. 2 und Fig. 3 sind in dieser Ausführungsform der Fig. 4 mehrere Fügewerkzeuge 5,5',5'' mit mehreren Kraftaufnehmern 6,6',6'' in Wirkverbindung mit dem Aktor 4 dargestellt. Die Signalverarbeitungseinrichtung 12 erfasst dabei den Kraftwert des Fügewerkzeugs, welches beim jeweiligen Fügevorgang eine Kraft 10 auf das Werkstück 8 ausübt. Da alle Fügewerkzeuge 5,5',5'' fest in Wirkverbindung mit dem Aktor verbunden sind, ist nur ein Beschleunigungsaufnehmer nötig, um den Beschleunigungswert zur Ermittlung des Fügewerts 15 zu erfassen.

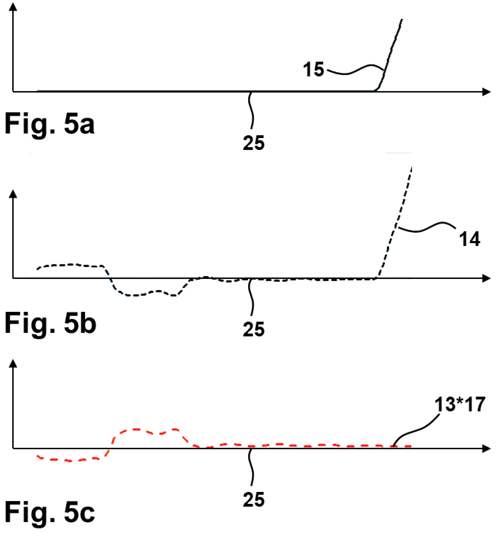

Exemplarisch ist in Fig. 5b ein Kraftwert 14 über dem Wegwert 25 dargestellt. Die vertikale Achse stellt eine Kraft in willkürlichen Einheiten dar. Der Kraftwert 14 zeigt Anfangs eine positive Kraft, welche auf den Kraftaufnehmer 6 wirkt und welche durch eine Beschleunigung des Fügewerkzeugs 5 auf den Kraftaufnehmer 6 ausgeübt wird. Dies ist insbesondere durch den Vergleich mit der entsprechenden Kraft aus Fig. 5c deutlich, welche dem Beschleunigungswert 13 und einem Beschleunigungskorrekturfaktor 17 entspricht. Der Beschleunigungskorrekturfaktor 17 beinhaltet die Masse des Fügewerkzeugs und ist bereits mit einem Faktor -1 versehen und zeigt daher die mit dem Kraftwert 14 zu summierende Kraft, um den Fügekraftwert 15 zu erhalten, welcher in Fig. 5a dargestellt ist.. Der Kraftwert der Fig. 5b wechselt in den negativen Bereich, was eine Bremsung des Fügewerkzeugs zeigt. Dies ist analog im Beschleunigungswert 13 der Fig. 5c zu erkennen. Ein Bereich mit konstantere Geschwindigkeit folgt, in dem Entsprechend keine Beschleunigungskraft den Kraftaufnehmer 6 wirkt. Die Geschwindigkeit wird ebenfalls beim Auftreffen auf das Werkstück beibehalten. Die Kraftwert 14 steigt an, jedoch bleibt der Beschleunigungswert 13 konstant bei null. Die Darstellung der Fig. 5a,b,c zeigt hierbei exemplarisch nur den Beginn eines Fügeprozesses. Das Ende des Fügeprozesses mit entsprechender Bremsung des Fügewerkzeugs 5 ist nicht dargestellt.

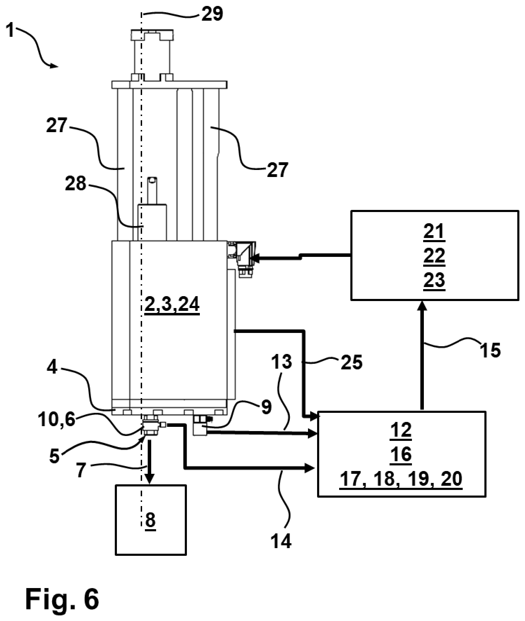

Die Fig. 6 zeigt eine schematische Darstellung einer weitere Ausführungsform eines Fügesystems 1. Der Antrieb 3 ist als elektromechanischer Antrieb 3 ausgeführt, der Aktor 4 ist teilweist plattenförmig am unteren Ende des Stators 2 sichtbar. Das Fügesystem weist eine Bremse 28 sowie zwei Linearführungen 27 auf, welche den Aktor in seiner Bewegung auf eine Raumachse 29 einschränken, um eine ungewollte Verdrehung des Fügewerkzeugs zu verhindern.

### Bezugszeichenliste

- 1: Fügesystem
- 2: Stator
- 3: Antrieb
- 4: Aktor
- 5, 5', 5",**...**: Fügewerkzeug
- 6,6',6",...: Kraftaufnehmer
- 7: Fügekraft
- 8: Werkstück
- 9: Beschleunigungsaufnehmer
- 10: Kraft
- 11: Beschleunigung
- 12: Signalverarbeitungseinrichtung
- 13: Beschleunigungswert (Beschleunigungssignal)
- 14: Kraftwert, (Kraftsignal)
- 15: Beschleunigungskompensierter Kraftwert, Fügekraftwert
- 16: Algorithmus (Signalverarbeitungseinrichtung)
- 17: Beschleunigungskorrekturfaktor
- 18: Kraftkorrekturfaktor
- 19: Kraftversatz
- 20: Beschleunigungsversatz
- 21: Steuerungseinrichtung
- 22: Algorithmus
- 23: Sollkraft, Sollkraftwert
- 24: Wegaufnehmer
- 25: Wegwert
- 26: Position
- 27: Linearführung
- 28: Bremse
- 29: Raumachse

## Patentansprüche

1. Fügesystem (1) zum Aufbringen einer Fügekraft (7) auf ein Werkstück (8); wobei das Fügesystem (1) einen Stator (2) aufweist; wobei das wobei das Fügesystem (1) einen Antrieb (3) aufweist; wobei das Fügesystem (1) einen Aktor (4) aufweist; wobei der Aktor (4) eine starre Verbindung mit einem Kraftaufnehmer (6) aufweist; wobei der Kraftaufnehmer (6) eine starre Verbindung mit einem Fügewerkzeug (5) aufweist; wobei der Aktor (4) kontrolliert bewegbar zum Stator (2) angeordnet ist; wobei das Fügewerkzeug (5) in Wirkverbindung mit dem Aktor (4) derart angeordnet, dass das Fügewerkzeug (5) eingerichtet ist die Fügekraft (7) auf das Werkstück (8) aufzubringen; wobei der Kraftaufnehmer (6) zwischen Aktor (4) und Fügewerkzeug (5) angeordnet ist; wobei der Kraftaufnehmer (6) eingerichtet ist eine auf das Fügewerkzeug (5) wirkende Kraft (10) zu erfassen; **dadurch gekennzeichnet, dass** ein Beschleunigungsaufnehmer (9) in Wirkverbindung mit dem Fügewerkzeug (5) angeordnet ist; und der Beschleunigungsaufnehmer (9) eingerichtet ist eine Beschleunigung (90) des Fügewerkzeugs (5) zu erfassen.

2. Fügesystem (1) nach dem vorgehenden Anspruch, **dadurch gekennzeichnet, dass** das Fügesystem (1) eine Signalverarbeitungseinrichtung (12) aufweist; dass die Signalverarbeitungseinrichtung (12) eingerichtet ist einen Beschleunigungswert (13) des Beschleunigungsaufnehmers (9) zu erfassen; dass die Signalverarbeitungseinrichtung (12) eingerichtet ist einen Kraftwert (14) des Kraftaufnehmers (6) zu erfassen; und dass die Signalverarbeitungseinrichtung (12) eingerichtet ist den Kraftwert (14) und den Beschleunigungswert (13) zusammenzuführen und einen beschleunigungskompensierten Kraftwert (15), kurz Fügekraftwert (15), zu ermitteln.

3. Fügesystem (1) nach dem vorgehenden Anspruch, **dadurch gekennzeichnet, dass** die Signalverarbeitungseinrichtung (12) eingerichtet ist den Beschleunigungswert (13) zeitgleich zum Kraftwert (14) zu erfassen; und dass die Signalverarbeitungseinrichtung (12) eingerichtet ist die zeitgleich erfassten Kraftwert (14) und Beschleunigungswert (13) zusammenzuführen und einen Fügekraftwert (15) zu ermitteln.

4. Fügesystem (1) nach einem der Ansprüche 2 oder 3, **dadurch gekennzeichnet, dass** die Signalverarbeitungseinrichtung (12) einen Algorithmus (16) aufweist; dass der Algorithmus (16) eigerichtet ist aus dem Kraftwert und dem Beschleunigungswert den Fügekraftwert zu ermitteln; und dass der Algorithmus eingerichtet ist den Fügekraftwert (15) als Funktion des Produkt aus Beschleunigungswert (13) und Beschleunigungskorrekturfaktor (17) summiert mit dem Produkt aus Kraftwert (14) und Kraftkorrekturfaktor (18) summiert mit der Summe aus Kraftversatz (19) und Beschleunigungsversatz (20) bereitzustellen.

5. Fügesystem (1) nach einem der vorgehenden Ansprüche 2 bis 4, **dadurch gekennzeichnet, dass** das Fügesystem (1) eine Steuerungseinrichtung (21) aufweist; dass die Steuerungseinrichtung (21) einen Algorithmus (22) aufweist; dass die Steuerungseinrichtung (21) eingerichtet ist den Fügekraftwert (15) zu erfassen; dass die Steuerungseinrichtung (21) eingerichtet ist den Fügekraftwert (15) mit einer Sollkraft (23) zu vergleichen; und dass die Steuerungseinrichtung (21) eingerichtet ist den Aktor (4) derart zu bewegen, dass der Fügekraftwert (15) sich der Sollkraft (23) angleicht.

6. Fügesystem (1) nach dem vorgehenden Anspruch, **dadurch gekennzeichnet, dass** das Fügesystem (1) einen Wegaufnehmer (24) aufweist; und dass der Wegaufnehmer (24) ein Wegwert (25) ermittelt und bereitstellt; und dass der Wegwert (25) eineindeutig zuordenbar ist zu einer räumlichen Position (26) des Fügewerkzeugs (5); und dass die Sollkraft (23) abhängig vom Wegwert (25) ist.

7. Fügesystem (1) nach einem der Ansprüche 2 bis 6, **dadurch gekennzeichnet, dass** die Signalverarbeitungseinrichtung (12) eingerichtet ist den Kraftwert (14) und den Beschleunigungswert (13) mit einer Abtastrate von mindestens 1 kHz, bevorzugt 10 kHz, zu erfassen; oder dass die Signalverarbeitungseinrichtung (12) eingerichtet ist den Kraftwert (14) und den Beschleunigungswert (13) mindestens jede Millisekunde, bevorzugt mindestens jede 100 Mikrosekunden, zu erfassen.

8. Fügesystem (1) nach einem der vorgehenden Ansprüche, **dadurch gekennzeichnet, dass** der Aktor (4) gegen den Stator (2) mit einer Geschwindigkeit von mehr als 400 mm·s⁻¹ bewegbar ist; oder bevorzugt dass der Aktor (4) gegen den Stator (2) mit einer Geschwindigkeit von mehr als 1500 mm·s⁻¹ bewegbar ist.

9. Fügesystem (1) nach einem der vorgehenden Ansprüche, **dadurch gekennzeichnet, dass** das Fügesystem (1) mindestens eine Bremse (28) aufweist; dass die Bremse (28) eingerichtet ist die Bewegung des Aktors (4) relativ zum Stator (2) zu bremsen; wobei der Antrieb (3) ein elektromechanischen Antrieb (3) ist; dass der Aktor (4) zum Stator (2) durch den Antrieb (3) linear verstellbar ist; dass der Stator (2) einen feststehenden Teil des Fügesystems (1) darstellt; dass der Aktor (4) und der Stator (2) mit mindestens einer Linearführung (27), bevorzugt zwei Linearführungen (27), beweglich verbunden sind, wobei die Linearführung (27) eine lineare Bewegung des Aktors (4) auf eine Raumachse (29) beschränkt; dass der Kraftaufnehmer (6) ein piezoelektrischer Kraftaufnehmer (6) oder ein piezoresistiver Kraftaufnehmer (6) oder ein Kraftaufnehmer (6) aufweisend Dehnungsmessstreifen ist; dass der Beschleunigungsaufnehmer (9) ein piezoelektrischer Beschleunigungsaufnehmer (9) ist; dass der Kraftaufnehmer (6) im Krafthauptschluss zwischen Fügewerkzeug (5) und Aktor (4) angeordnet ist.

10. Fügesystem (1) nach einem der vorgehenden Ansprüche, **dadurch gekennzeichnet, dass** mehrere Fügewerkzeuge (5,5',5'') in Wirkverbindung mit dem Aktor (4) derart angeordnet sind, dass die Fügewerkzeuge (5,5',5") jeweils eingerichtet sind eine Fügekraft (7) aufzubringen; und dass zwischen jedem Fügewerkzeug (5,5',5") und dem Aktor (4) jeweils ein Kraftaufnehmer (6,6'6,'') angeordnet ist.

11. Verfahren zum Aufbringen einer Fügekraft (7) auf ein Werkstück (8) durch ein Fügesystem (1), wobei ein Antrieb (3) einen Aktor (4) gegen einen Stator (2) kontrolliert bewegt; wobei der Aktor (4) mit mindestens einem Kraftaufnehmer (6) und mindestens einem Fügewerkzeug (5) starr verbunden ist; wobei der Kraftaufnehmer (5) eine auf das Fügewerkzeug (6) wirkende Kraft (10) als Kraftwert (14) ermittelt; wobei das Fügewerkzeug (5) in Wirkverbindung mit dem Aktor (4) derart angeordnet, dass das Fügewerkzeug (5) in Richtung eines Werkstückes (8) bewegt wird, um eine Fügekraft (7) auf das Werkstück (8) aufzubringen; wobei eine durch die Bewegung bedingte Beschleunigung (11) des Fügewerkzeugs (5) eine Trägheitskraft auf den Kraftaufnehmer (6) ausübt; wobei der Kraftaufnehmer (6) zwischen Aktor (4) und Fügewerkzeug (5) angeordnet ist um die auf das Fügewerkzeug (5) wirkende Kraft (10) zu ermitteln; **dadurch gekennzeichnet, dass** ein Beschleunigungsaufnehmer (9) in Wirkverbindung mit dem Fügewerkzeug (5) angeordnet ist und eine Beschleunigung (11) des Fügewerkzeugs (5) als Beschleunigungswert (13) ermittelt; und wobei der Antrieb (3) den Aktor (4) in Abhängigkeit einer Funktion aus Kraftwert (14) und Beschleunigungswert (13) bewegt.

12. Verfahren nach dem vorgehenden Anspruch, **dadurch gekennzeichnet, dass** eine Signalverarbeitungseinrichtung (12) den Beschleunigungswert (13) des Beschleunigungsaufnehmers (9) erfasst; dass die Signalverarbeitungseinrichtung (12) den Kraftwert (14) des Kraftaufnehmers (6) erfasst; dass die Signalverarbeitungseinrichtung (12) einen Algorithmus (16) aufweist; dass der Algorithmus (16) aus dem Kraftwert (14) und dem Beschleunigungswert (13) einen beschleunigungskompensierten Kraftwert (15), kurz Fügekraftwert (15), ermittelt; dass eine Steuerungseinrichtung (21) den Fügekraftwert (15) erfasst; dass die Steuerungseinrichtung (21) den Fügekraftwert (15) mit einer Sollkraft (23) vergleicht; und dass die Steuerungseinrichtung (21) den Aktor (4) in Abhängigkeit von der Differenz zwischen Sollkraft (23) und Fügekraftwert (15) bewegt.

13. Verfahren nach dem vorgehenden Anspruch, **dadurch gekennzeichnet, dass** das Fügesystem (1) nach einem der Ansprüche 1 bis 10 ausgeführt ist; dass die Signalverarbeitungseinrichtung (12) den Beschleunigungswert (13) zeitgleich zum Kraftwert (14) erfasst; dass eine Verzögerung zwischen der Erfassung des Kraftwerts (14) und der Erfassung des Beschleunigungswerts (13) kleiner oder gleich 50 Mikrosekunden ist; dass ein Wegaufnehmer (24) eine räumlichen Position (26) des Fügewerkzeugs (5) eineindeutig als Wegwert (25) erfasst; und dass die Sollkraft (23) abhängig vom Wegwert (25) ist.

14. Verfahren nach einem der vorgehenden Ansprüche 12 bis 13, **dadurch gekennzeichnet, dass** der Algorithmus (16) der Signalverarbeitungseinrichtung (12) die Summe aus dem Produkt aus Beschleunigungswert (13) und Beschleunigungskorrekturfaktor (17) und dem Produkt aus Kraftwert (14) und Kraftkorrekturfaktor (17) und einem Kraftversatz (19) und einem Beschleunigungsversatz (20) bildet und bereitstellt.

15. Verfahren nach einem der Ansprüche 11 bis 14, **dadurch gekennzeichnet, dass** sich der Aktor (4) mit einer Geschwindigkeit von mehr als 400 mm·s⁻¹ relativ zum Stator (2) bewegt oder bevorzugt dass sich der Aktor (4) mit einer Geschwindigkeit von mehr als 1500 mm·s⁻¹ relativ zum Stator (2) bewegt; dass die Signalverarbeitungseinrichtung (12) den Kraftwert (14) und den Beschleunigungswert (13) mit einer Abtastrate von mindestens 1 kHz, bevorzugt 10 kHz, erfasst oder dass die Signalverarbeitungseinrichtung (12) den Kraftwert (14) und den Beschleunigungswert (13) mindestens jede Millisekunde, bevorzugt mindestens jede 100 Mikrosekunden, erfasst.
